# EUROPÄISCHE PATENTSCHRIFT

(11) **EP 3 444 577 B1**
(45) Veröffentlichungstag und Bekanntmachung des Hinweises auf die Patenterteilung: **11.01.2023**
(21) Anmeldenummer: 18188907.2
(22) Anmeldetag: 14.08.2018
(51) Int. Cl.: G01J 3/42, G01J 3/28, G01J 3/10, G01J 3/02, G01J 3/50, G01N 21/359, G01N 21/85, G01N 21/84

(54) **SPEKTROMETRISCHER MESSKOPF FÜR FORST-, LAND- UND LEBENSMITTELWIRTSCHAFTLICHE ANWENDUNGEN**
SPECTROMETRIC MEASURING HEAD FOR GARDENING, AGRICULTURAL AND FOOD APPLICATIONS
TÊTE DE MESURE SPECTROMÉTRIQUE POUR APPLICATIONS FORESTIÈRES, AGRICOLES ET ALIMENTAIRES

(30) Priorität: 17.08.2017 DE 102017214352
(43) Veröffentlichungstag der Anmeldung: 20.02.2019
(73) Patentinhaber: Deere & Company, Moline, IL 61265 (US)
(72) Erfinder: Schade, Peter, 68163 Mannheim (DE); Klein, Helge, 68163 Mannheim (DE)
(74) Vertreter: Holst, Sönke

(56) Entgegenhaltungen:
- DE-A1-102009 017 210
- DE-A1-102010 041 793
- US-A1- 2008 186 487

## Beschreibung

Die Erfindung betrifft einen spektroskopischen Messkopf nach dem Oberbegriff des Anspruchs 1.

### Stand der Technik

Bei verschiedenen landwirtschaftlichen Arbeiten besteht ein Interesse daran, bei einer Probe sensorisch den Anteil an gewissen Inhaltsstoffen zu erfassen. Als Probe kommen neben Erntegut beispielsweise auch Bodenproben, Gülle und Milch in Frage. Die erfassten Inhaltsstoffe können dazu dienen, die Probe (insbesondere Erntegut oder andere landwirtschaftliche Produkte) monetär zu bewerten oder die sensierten Werte werden zu Zwecken der Präzisionslandwirtschaft abgespeichert, z.B. zwecks maßgeschneiderter Düngerabgabe, oder sie dienen zur Kontrolle von Ausbringmengen z.B. eines Güllefasses.

Eine gebräuchliche Technik für die Inhaltsstoffbestimmung im landwirtschaftlichen Bereich ist die Nahinfrarotspektroskopie, bei der die Probe mit breitbandigem Licht beaufschlagt und das durch die Probe reflektierte oder transmittierte Licht spektral zerlegt und analysiert wird. Auf einer derartigen Technik basierende Messköpfe sind z.B. in DE 199 22 867 A1, WO 01/31304 A1 und DE 10 2004 048 103 A1 beschrieben. Sie verwenden ein dispersives Element (Prisma oder Gitter) zur spektralen Zerlegung des Lichts und einen Zeilendetektor, um die einzelnen Wellenlängen gleichzeitig sensieren zu können. Diese Messköpfe verwenden bewegliche Elemente, um zur Referenzierung einen Weißstandard in den Strahlengang zu bewegen.

Die als gattungsbildend angesehene DE 10 2010 041 793 A1 beschreibt eine spektroskopische Messanordnung mit einer Anzahl an Lichtquellen, die durch eine schließbare Blende, die auch als Standard dient, und ein Fenster eine Probe beleuchten. Das reflektierte Licht wird durch einen teildurchlässigen Spiegel auf ein Spektrometer geleitet, dessen Einlass zur Dunkelreferenzierung durch einen Shutter verschließbar ist. Weitere Lichtquellen in Form von Gasentladungslampen zur Wellenlängenreferenzierung sind den zur Beleuchtung der Probe benachbarten Lichtquellen benachbart oder senden ihr Licht direkt auf den teildurchlässigen Spiegel.

Die US 2008/0186487 A1 zeigt eine spektroskopische Messanordnung mit einer Lichtquelle, einem Spektrometer und einem von der Lichtquelle beleuchtbaren Standard. Eine Kameraanordnung mit einer zweiten Lichtquelle ist gegenüber der spektroskopischen Messanordnung um 90° versetzt angebracht. Die DE 10 2009 017 210 A1 zeigt eine Kameraanordnung zur Beobachtung von Schüttgütern, mit einer am Fenster zwischen der Probe und der Kamera angebrachten Referenzkarte als Standard für die Kamera.

### Aufgabe

Das der Erfindung zu Grunde liegende Problem wird darin gesehen, einen spektroskopischen Messkopf bereitzustellen, der möglichst wenig bewegliche Elemente zur Referenzierung benötigt.

### Lösung

Die vorliegende Erfindung wird durch die Patentansprüche definiert.

Ein spektroskopischer Messkopf für landwirtschaftliche Anwendungen umfasst ein Gehäuse mit einem Fenster und einem innerhalb des Gehäuses angeordneten Spektrometer, das ein dispersives Element und einen Sensor umfasst, eine innerhalb oder außerhalb des Gehäuses angeordnete, erste Lichtquelle zur Beaufschlagung einer Probe mit insbesondere breitbandigem Licht, wobei die erste Lichtquelle und das Gehäuse derart angeordnet sind, dass das Licht von der ersten Lichtquelle durch das Fenster in das Spektrometer gelangt, nachdem es durch die Probe transmittiert und/oder reflektiert wurde, und einen mit Licht beaufschlagbaren Standard zur Referenzierung des Spektrometers, der durch eine im Gehäuse angeordnete, zweite Lichtquelle mit insbesondere breitbandigem Licht beaufschlagbar ist.

Mit anderen Worten erfolgt die Beleuchtung der Probe in an sich bekannter Weise durch eine erste Lichtquelle, die innerhalb oder außerhalb des Gehäuses angeordnet ist, das ein Fenster und ein Spektrometer enthält. Die Referenzierung des Spektrometers erfolgt hingegen durch eine im Gehäuse angeordnete, zweite Lichtquelle. Auf diese Weise erübrigen sich aufwändige, einen fremdkraftbetätigten Antrieb erfordernde Mittel, um den Standard in den Strahlengang der ersten Lichtquelle zu bewegen, wie sie im Stand der Technik vorgesehen sind.

Auf dem Fenster oder zwischen dem Fenster und dem Spektrometer ist ein teildurchlässiger Spiegel angeordnet, der vom Standard reflektiertes Licht in das Spektrometer reflektiert.

Zwischen der zweiten Lichtquelle und dem Spektrometer, nämlich zwischen dem Spiegel und dem Standard ist ein Filter mit elektrisch kontrollierbarer Durchlässigkeit angeordnet.

Das Spektrometer kann als mikro-elektro-mechanisches System (MEMS) ausgeführt sein.

Die optische Achse des Spektrometers kann mit der Oberflächennormalen des Fensters einen von null verschiedenen Winkel einschließen.

Im Gehäuse kann ein weiteres Spektrometer angeordnet sein, das gegenüber dem ersten

Spektrometer winkeiversetzt angeordnet ist. Die beiden Spektrometer können gleiche, teilweise überlappende oder verschiedene spektrale Messbereiche aufweisen.

Die Lichtquellen und ggf. der Filter können mit einer Steuerung verbunden sein, die betreibbar ist, im normalen Messbetrieb die erste Lichtquelle einzuschalten und die zweite Lichtquelle auszuschalten und den Filter undurchlässig zu schalten und zur Referenzierung des Spektrometers die erste Lichtquelle auszuschalten und die zweite Lichtquelle einzuschalten und den Filter durchlässig zu schalten.

Der Messkopf kann zu beliebigen forst-, lebensmittel- oder landwirtschaftlichen Messaufgaben herangezogen werden. Der Messkopf lässt sich stationär oder mobil einsetzen, um eine stationäre Probe zu untersuchen, oder die Probe wird am Messkopf (oder umgekehrt) vorbeigeführt, z.B. auf einem landwirtschaftlichen Feld, um Erntegut- oder Bodeneigenschaften und insbesondere Inhaltsstoffe des Ernteguts oder Bodens anhand der ermittelten Spektren zu evaluieren. Sie lässt sich auch zur Untersuchung der Inhaltsstoffe (z.B. Kalium oder Phosphor) von anderen, gasförmigen, festen oder flüssigen Proben (z.B. Gülle, Milch, Flüssigdünger, Spritzmitteln, stehende Pflanzen) einsetzen, sei es als Handgerät oder angebracht an einer Maschine zum Transportieren und/oder Ausbringen einer Flüssigkeit (z.B. Feldspritze, Güllefass). Die ermittelten Inhaltsstoffe und/oder daraus abgeleitete Daten der Probe können durch eine Rechnereinrichtung georeferenziert kartiert und/oder zur Ansteuerung einer landwirtschaftlichen Maschine verwendet werden, z.B. um die Ausbringung von Düngemitteln, Gülle, Spritzmitteln, Saatgut, Siliermittel etc. zu kontrollieren.

### Ausführunasform

In den Zeichnungen sind zwei nachfolgend näher beschriebene Ausführungsbeispiele dargestellt, wobei die Bezugszeichen nicht zu einer einschränkenden Auslegung der Ansprüche herangezogen werden sollen. Es zeigt:
- Fig. 1: eine Seitenansicht einer Erntemaschine mit einem spektrometrischen Messkopf,
- Fig. 2: einen Schnitt durch den Messkopf entlang der Linie 2-2 der Figur 1,
- Fig. 3: einen Schnitt durch den Messkopf entlang der Linie 3-3 der Figur 2, und
- Fig. 4: einen Schnitt durch eine zweite Ausführungsform eines Messkopfes.

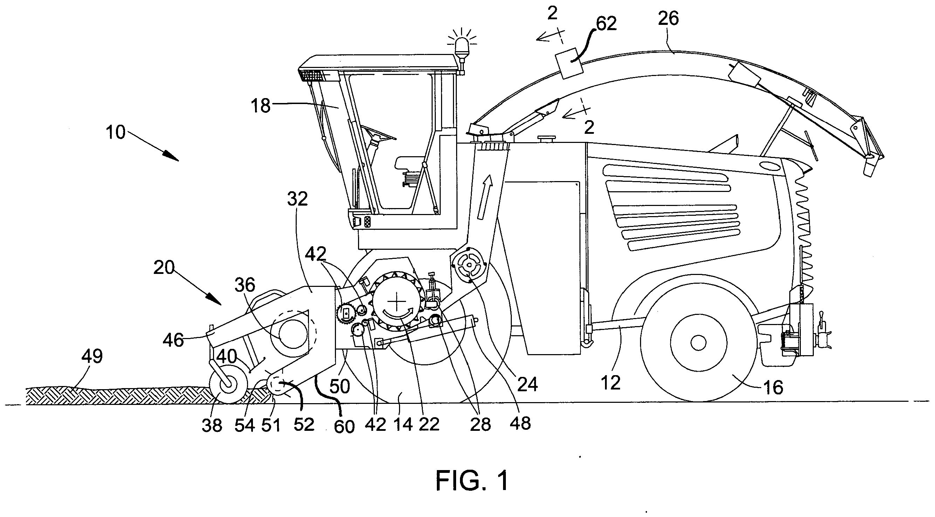

In der Figur 1 ist eine selbstfahrende Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz 20 einsehbar ist. Mittels des Erntevorsatzes 20 vom Boden aufgenommenes Erntegut, z. B. Gras oder dergleichen, wird über einen Einzugsförderer 42 mit Vorpresswalzen, die innerhalb eines den Erntevorsatz 20 abnehmbar tragenden Einzugsgehäuses 50 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Auswurfkrümmer 26. Zwischen der Häckseltrommel 22 und der Fördervorrichtung 24 befindet sich eine Nachzerkleinerungsvorrichtung 28 mit zwei Körnerprozessorwalzen, durch die das zu fördernde Gut der Fördervorrichtung 24 tangential zugeführt wird.

Der Erntevorsatz 20 ist als so genannte Pick-up ausgebildet. Der Erntevorsatz 20 baut sich auf einem Gestell 32 auf und stützt sich über beidseitig angebrachte Stützräder 38, die über je einen Träger 46 am Gestell 32 befestigt sind, auf dem Erdboden ab. Die Aufgabe des Erntevorsatzes 20 besteht darin, auf dem Boden eines Felds verstreut oder in einem Schwad 49 abgelegtes Erntegut aufzunehmen und es der Erntemaschine 10 zur weiteren Bearbeitung zuzuführen. Hierzu wird der Erntevorsatz 20 während des Erntebetriebes mit geringem Abstand zum Erdboden über das Feld bewegt, während er zum Transport auf einer Strasse oder auf Wegen mittels eines Aktors 48 in Form eines Hydraulikzylinders angehoben wird, welcher das Einzugsgehäuse 50 und den daran befestigten Erntevorsatz 20 um die Drehachse 58 der Häckseltrommel 22 verschwenkt. Der Aktor 48 dient auch zur Einstellung der Höhe des Gutaufnehmers 20 über dem Boden, bzw. zur Einstellung des Auflagedrucks der Stützräder 38 auf dem Erdboden. Zum Erntevorsatz 20 gehört eine Querförderschnecke 36, die das aufgenommene Gut von den Seiten des Erntevorsatzes 20 zu einer in der Mitte gelegenen, nicht gezeigten Abgabeöffnung fördert, hinter der der Einzugsförderer 42 folgt. Der Erntevorsatz 20 weist auch einen (wie die Querförderschnecke 36) rotativ angetriebenen Gutaufnehmer 54 auf, der unterhalb des Abgabeförderers 36 angeordnet ist und mit seinen Zinken 51 das Gut vom Erdboden anhebt, um es dem Abgabeförderer 36 zu übergeben. Außerdem ist ein Niederhalter 40 in Form eines über dem Gutaufnehmer 34 angeordneten Bleches am Gestell 32 befestigt.

Im Folgenden beziehen sich Richtungsangaben, wie seitlich, unten und oben, auf die Vorwärtsbewegungsrichtung V des Erntevorsatzes 20 und der Erntemaschine 10, die in den Figuren nach links verläuft.

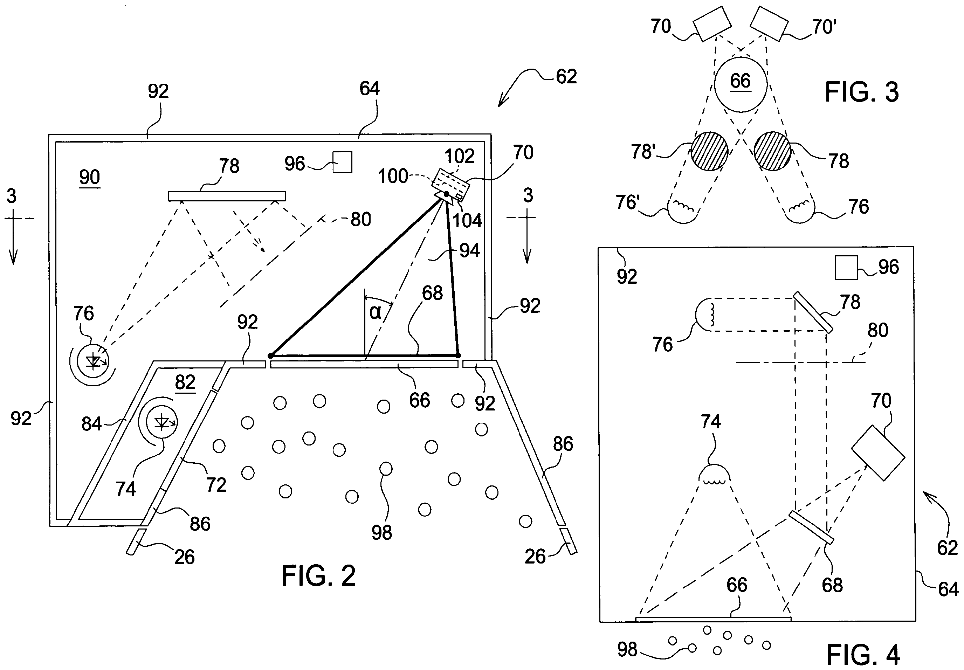

Am Auswurfkrümmer 26 ist ein spektrometrischer Messkopf 62 angebracht, der in den Figuren 2 und 3 detaillierter gezeigt ist. Der Messkopf 62 umfasst ein Gehäuse 64 mit oberen, seitlichen und unteren Wänden 92. In der unteren Wand 92 ist ein Fenster 66 eingelassen, das vorzugsweise aus Saphirglas besteht. Innerhalb des Gehäuses ist unmittelbar oberhalb des Fensters 66 ein teildurchlässiger Spiegel 68 angeordnet, der auch als auf das Fenster 66 aufgedampfte Schicht realisiert oder im Abstand vom Fenster 66 angeordnet sein könnte. Der sensitive Bereich (Apertur 94) des Spektrometers 70, das als mikro-elektrisch-mechanisches System ausgeführt sein kann, ist auf das Fenster 66 ausgerichtet. Die optische Achse des Spektrometers 70 schließt mit der Oberflächennormalen des Fensters 66 einen Winkel α ein, der einige 10° betragen kann; es wäre jedoch auch denkbar, die optische Achse des Spektrometers 70 mit der Oberflächennormalen des Fensters 66 auszurichten. Das Spektrometer 70 umfasst ein durch einen Aktor 104 verstellbares dispersives Element 100 und einen Sensor 102. Der Aktor 104 ermöglicht es, dass der Sensor 102 jeweils einen durch den Aktor 104 vorgegebenen, bestimmten Wellenbereich des einlaufenden Lichts empfängt, während die anderen Wellenlängenbereiche nicht den Sensor 102 erreichen.

Die Beleuchtung der Probe 98, bei der es sich bei der dargestellten Ausführungsform um zerkleinertes Erntegut handelt, das durch den Auswurfkrümmer 26 strömt, erfolgt durch eine erste Lichtquelle 74, die innerhalb eines ihr zugeordneten Raumes 82 angeordnet ist, der durch eine Wand 84 vom Innenraum des Gehäuses 64 getrennt ist und die Probe 98 durch ein Beleuchtungsfenster 72 bestrahlt, das vorzugsweise ebenfalls aus Saphirglas besteht. Die erste Lichtquelle 74 kann eine Halogenlampe oder eine Leuchtdiode oder eine beliebige andere Lichtquelle sein.

Das Gehäuse 64 umfasst in seinem unteren Bereich Wände 86, die als Verlängerung der seitlichen Wände des Auswurfkrümmers 26 geformt und damit lösbar verbunden sind. Nach Abnehmen des Messkopfs 62 kann der ansonsten durch den Messkopf 62 geschlossene Ausschnitt des Auswurfkrümmers 26 durch eine Abdeckung (nicht gezeigt) geschlossen werden.

Zur Referenzierung des Spektrometers 70 ist innerhalb des Gehäuses 64 eine zweite Lichtquelle 76 angebracht, die ebenfalls eine Halogenlampe oder eine Leuchtdiode oder eine beliebige andere Lichtquelle sein kann. Die zweite Lichtquelle 76 beleuchtet einen Standard 78, bei dem es sich insbesondere um eine diffus reflektierende, weiße Fläche handeln kann. Das vom Standard 76 reflektierte Licht gelangt durch einen Filter 80 mit elektrisch steuerbarer Durchlässigkeit zum teildurchlässigen Spiegel 68 und wird durch diesen zum Spektrometer 70 reflektiert. Dadurch wird der Standard 78 über den teildurchlässigen Spiegel 68 in das Spektrometer 70 abgebildet.

Eine Steuerung 96 ist mit den Lichtquellen 74, 76 verbunden und kontrolliert deren Helligkeit, wie auch die Durchlässigkeit des Filters 80. Im normalen Messbetrieb ist die erste Lichtquelle 74 eingeschaltet und die zweite Lichtquelle 76 ausgeschaltet und/oder der Filter 80 undurchlässig. Das von der ersten Lichtquelle 74 durch das Beleuchtungsfenster 72 tretende Licht, das insbesondere im sichtbaren und/oder (nah-) infraroten Spektralbereich liegt, trifft auf die Probe 98 und wird von dieser reflektiert und teilweise auch transmittiert und gelangt durch das Fenster 66 und den teildurchlässigen Spiegel 68 zum Spektrometer 70, in dem es sukzessive in eine spektralen Bestandteile zerlegt wird und letztere durch den Sensor 102 erfasst werden. Man erhält demnach Spektren, basierend auf denen anhand von Kalibrierdaten durch die Steuerung 96 oder eine andere Auswertungseinheit der Gehalt der Probe 98 an bestimmten Inhaltsstoffen errechnet wird. Zur Referenzierung des Spektrometers 70 wird die erste Lichtquelle 74 durch die Steuerung 96 ausgeschaltet und die zweite Lichtquelle 76 eingeschaltet und/oder der Filter 80 auf durchlässig geschaltet. Dann gelangt das vom Standard 78 reflektierte Licht in das Spektrometer 70, dessen spektrale Empfindlichkeit nunmehr durch die Steuerung 96 oder eine andere Auswertungseinheit kalibriert werden kann. Der Filter 80 kann als Polarisationsfilter (bekannt z.B. aus der Displaytechnologie) ausgeführt sein und ist zwischen dem Standard 78 und dem teildurchlässigen Spiegel 68 angeordnet und erlaubt es, die durchgelassene Lichtmenge mit einem Spannungssignal zu steuern. In diesem Fall ist es möglich, während des Referenziervorgangs (und ggf. auch während des Messvorgangs) die zweite Lichtquelle 76 bei konstanter Lichtintensität zu betreiben.

Für den beschrieben Referenziervorgang ist es sinnvoll, dass die Probe 98 im Messbetrieb nicht durch das Beleuchtungsfenster 72 beleuchtet wird, da sonst Licht über den teildurchlässigen Spiegel 68 in das Spektrometer 70 gelangt. Daher ist das zusätzliche Beleuchtungsfenster 72 vorteilhaft, durch welches die erste Lichtquelle 74 die Probe 98 beleuchtet. Bei einem Transmissionssensor ist die erste Lichtquelle 74 zur Beleuchtung des zu messenden Guts (Probe 98) typischerweise gegenüber dem Fenster 66 angebracht und durchleuchtet die Probe 98. Eine derartige Messgeometrie schränkt die Einsatzflexibilität des Messkopfes 62 ein, da in jedem Einbauort eine entsprechende Geometrie hergestellt werden muss. Eine Messung in Reflexion bietet eine höhere Flexibilität, da der Messkopf 62 mit dem Spektrometer 70 und der ersten Lichtquelle 74 an einer Seite angebracht werden. Für den Betrieb des Messkopfes 62 kann aber auch eine Geometrie gewählt werden, in welcher das Beleuchtungsfenster 72 und das Fenster 66 einen Winkel, z.B. 45° einschließen (vgl. Fig. 2). Dadurch wird eine kombinierte Reflexions- und Transmissionsmessung durchgeführt. Das Fenster 66 und das Beleuchtungsfenster 72 könnten auch einen kleineren Winkel als in der Figur 2 dargestellt einschließen oder parallel zueinander verlaufen, was eine reine Reflexionsmessung der Probe 98 bedeuten würde.

Falls der spektrale Bereich eines einzigen Spektrometers 70 nicht ausreichen sollte, kann der Messkopf 62 auch mit einem weiteren Spektrometer 70' und einer weiteren, zweiten Lichtquelle 76' und einem weiteren Standard 78' ausgestattet werden, die gegenüber dem ersten Spektrometer 70, der ersten Lichtquelle 76 und dem Standard 78 um die Mittelachse des Fensters 66 versetzt angebracht werden können, wie in der Figur 3 gezeigt. Die von den beiden Spektrometern 70, 70' abgedeckten Spektralbereiche können (müssen sich aber nicht) sich teilweise überlappen, was es in einer möglichen Ausführungsform ermöglicht, die überlappenden Spektralbereiche zu nutzen, um die Messwerte eines der Spektrometer 70, 70' anhand der Messwerte des anderen Spektrometers 70', 70 zu referenzieren. Es könnten auch zwei Spektrometer 70, 70' mit gleichen Spektralbereichen verwendet werden, die jeweils nur zur gleichzeitigen Messung unterschiedlicher Teile der Spektralbereiche verwendet werden, um die Messung zu beschleunigen.

Die Figur 4 zeigt eine zweite Ausführungsform eines Messkopfes 62, die ebenfalls entlang der Linie 2-2 der Figur 1 aufgenommen ist, obwohl der Messkopf 62 gegenüber der Probe 98 auch um einen beliebigen Winkel um die Hochachse gedreht werden könnte. Bei der zweiten Ausführungsform ist die erste Lichtquelle 74 mit im Gehäuse 64 des Messkopfes 62 aufgenommen, sodass sich das zusätzliche Beleuchtungsfenster 72 der Figur 2 erübrigt. Der teildurchlässige Spiegel 68 ist außerhalb des Lichtkegels der ersten Lichtquelle 74 angeordnet und somit vom Spiegel 68 näher an das Spektrometer 70 gerückt. Die Anordnung der zweiten Lichtquelle 78, des Standards 78 und des Filters 80 ist etwas verschoben, entspricht jedoch funktional jener nach Figur 2.

Wie oben ausgeführt, ist das Spektrometer 70 in den dargestellten Ausführungsformen als Micro-Electro-Mechanical System (MEMS) ausgeführt. Bisherige, in der Landtechnik verwendete Spektrometer sind hingegen mit einem dispersiven Gitter zur Zerlegung des von der Probe reflektierten Lichts in die spektralen Bestandteile und einer mehrkanaligen Diodenzeile (Si oder InGaAs) zur Detektion des Lichts ausgestattet. Diese klassischen Spektrometer sind kostenintensiv, da sie neben den genannten Elementen Gitter und Detektorzeile noch ein optisches System aus mehreren Linsen umfassen. Die Kosten schränken die bisherigen Einsatzmöglichkeiten der Inhaltsstoffmessung auf hochwertige Landmaschinen (Feldhäcksler, Mähdrescher) ein oder erfordern ein flexibles System, bei dem ein Sensor an verschiedenen Maschinen angebaut werden kann. Die MEMS-Spektrometer genannten Systeme (wie sie beispielsweise in S. Hintschich, MEMS-based miniature near-infrared spectrometer for application in environmental and food monitoring, Proceedings of the 8th International Conference on Sensing Technology, Sep. 2-4, 2014, Liverpool, UK, oder T. Pügner et al., Near-Infrared Grating Spectrometer for Mobile Phone Applications, Appl. Spectrosc. 2016, 70(5), 734-745 oder DE 10 2007 011 324 A1 oder EP 1637850 A1 beschrieben wurden) sind wesentlich preiswerter.

Eine stabile und schnelle Messung (bei Messfrequenzen in der Größenordnung von 1 Hz) inhomogener, z.T. granularer, Medien wie z.B. Getreidekörner oder Gras- oder Maishäcksel in einem Gutfluss erfordert die gleichzeitige Messung einer großen Anzahl von Partikeln. Das bedeutet, dass der Messfleck, von dem das Spektrometer 70 Licht registriert und zur Ermittlung der Inhaltsstoffe verwendet, entsprechend groß und möglichst homogen ausgeleuchtet sein sollte , um eine repräsentative Messung für das Material durch eine Einzelmessung zu erhalten. Wird ein zu kleiner Messfleck verwendet, dann verändern sich das gemessene Spektrum und damit das Messergebnis mit jeder Einzelmessung, da sich die Präsentation der Probe vor dem Messfenster fortlaufend ändert. Es müssen dann viele Einzelmessungen gemittelt werden, um ein für die Probe repräsentatives Mittelwertspektrum, zu erhalten. Dadurch sinkt die Messfrequenz. Bei einem genügend großen Messfleck fällt die fortlaufende Änderung der Probenpräsentation weniger stark ins Gewicht, da eine optische Mittelung stattfindet. Typische Messflecke für z.B. eine Getreidemessung im Gutstrom haben z.B. einen Durchmesser von 3-5cm.

MEMS Spektrometer verfügen unabhängig von der Ausführung (z.B. als Fabry Perot oder als Michelson-Interferometer) über kleine Lichtleitwerte am Eingang, da sie eine kleine sensitive Fläche aufweisen (eine einzige Diode als Sensor 102) und kleine numerische Aperturen am Eingang anbieten, da die internen optischen Elemente eine starke Richtungscharakteristik des Lichts verlangen. Da das zu untersuchende Material eine diffus strahlende Oberfläche darstellt (das Licht wird in alle Richtungen gleich stark reflektiert) und aufgrund der kleinen Lichtleitwerte des MEMS Spektrometers ist es angebracht, einen hinreichenden Abstand zwischen Spektrometer 70 und Probe 98 vorzusehen. Es wäre zwar möglich, diesen Abstand durch ein System von Linsen zu verringern, dabei geht jedoch Licht verloren und die Probe 98 muss stärker beleuchtet werden. Gleichzeitig ist es nicht erwünscht, zusätzliche Linsen in das System einzubringen, um die Kosten des Messkopfs 62 gering zu halten. Die vom Spektrometer 70 betrachtete Oberfläche lässt sich vergrößern, indem das Spektrometer 70 schräg auf den Messfleck (Winkel a) schaut, wie in der Figur 2 dargestellt.

Es sei noch angemerkt, dass der Standard 78 auch als nicht diffuser reflektierender Standard ausgeführt werden kann. Dann wird die zweite Lichtquelle 76 so installiert, dass Lichtquelle 76, Standard 78, Fenster 66 mit Spiegel 68 und Spektrometer 70 jeweils in einem optischen Weg liegen. Die zweite Lichtquelle 76 kann auch direkt mit dem Standard 78 kombiniert werden, wenn die Lichtquelle 76 den Standard 78 z.B. durchstrahlt. Eine Schwarzreferenzierung kann dann erfolgen, indem der Messkanal im relevanten Spektralbereich nichtreflektierend und so ausgeführt wird, dass kein äußeres Licht eindringen kann und eine Schwarzmessung erfolgt, wenn kein Messgut vor dem Fenster 66 liegt und die Lichtquellen 74 und 76 abgeschaltet sind. Es ist ebenfalls möglich, die zweite Lichtquelle 74 bei verschiedenen Intensitäten zu betreiben, um den Standard 78 verschieden intensiv zu beleuchten. Durch die Aufnahme mehrere Spektren bei verschiedenen Intensität kann die Linearität des Spektrometers 70 (d.h. des Sensors 102) kontrolliert und ggf. korrigiert werden.

Alternativ oder zusätzlich kann der Standard 78 als Wellenlängenstandard oder als kombinierter Weiß- und Wellenlängenstandard ausgeführt werden, um zusätzlich eine Kontrolle einzelner Wellenlängen zu ermöglichen. Der kombinierte Weiß- und Wellenlängenstandard besteht zu einem gewissen Anteil seiner Oberfläche aus einem Weißstandard und mit dem verbleibenden Anteil aus einem Wellenlängenstandard (z.B. jeweils Halbkreise oder nebeneinanderliegende Rechtecke). Ein oder mehrere zwischen dem Standard 78 und dem teildurchlässigen Spiegel 68 liegende(r) Filter 80 kann oder können so geschaltet werden, dass jeweils nur auf einen der Standards 78 Licht trifft bzw. dieses zum Spiegel 68 durchgelassen wird. So kann eine getrennte Wellenlängen- und Weißreferenzierung durchgeführt werden. Im Messbetrieb blockiert der Filter 80 auch bei den Ausführungsformen nach Figur 2 und 4 jegliches Licht, welches durch das Fenster 66 auf den Standard 78 treffen und von dort wieder zum Spektrometer 70 zurück reflektiert werden könnte.

Der Messkopf 62 könnte weiterhin mehrere Positionen für die Installation von Spektrometern 70 auf weisen, die alle auf den gleichen Messfleck ausgerichtet sind. So ist es möglich, den Sensor je nach Anwendungsfall oder erforderlicher Messgenauigkeit mit einem oder mehreren MEMS-Spektrometern auszustatten, die jeweils verschiedene spektrale Bereiche abdecken.

Der Messkopf 62 könnte schließlich einen internen Beschleunigungssensor aufweisen. Mit diesem ist es möglich gewisse Operationen, z.B. die Referenzierung, nur durchzuführen, wenn die am Beschleunigungssensor anliegenden Beschleunigungen nicht über einem Schwellenwert liegen.

## Patentansprüche

1. Spektroskopischer Messkopf (62) für forst-, land- und lebensmittelwirtschaftliche Anwendungen, umfassend:
ein Gehäuse (64) mit einem Fenster (66) und einem innerhalb des Gehäuses (64) angeordneten Spektrometer (70), das ein dispersives Element (100) und einen Sensor (102) umfasst,
eine erste Lichtquelle (74) zur Beaufschlagung einer Probe (98) mit Licht, welches durch das Fenster (66) in das Spektrometer (70) gelangt, nachdem es durch die Probe (98) transmittiert und/oder reflektiert wurde,
einen mit Licht beaufschlagbaren Standard (78) zur Referenzierung des Spektrometers (70), wobei der Standard (78) durch eine im Gehäuse (64) angeordnete, zweite Lichtquelle (76) mit Licht beaufschlagbar ist, auf dem Fenster (66) oder zwischen dem Fenster (66) und dem Spektrometer (70) ein teildurchlässiger Spiegel (68) angeordnet ist, der vom Standard (78) reflektiertes Licht in das Spektrometer (70) reflektiert und zwischen der zweiten Lichtquelle (76) und dem Spektrometer (70) ein Filter (80) mit elektrisch kontrollierbarer Durchlässigkeit angeordnet ist,
**dadurch gekennzeichnet, dass** der Filter (80) zwischen dem Spiegel (68) und dem Standard (78) angeordnet ist.

2. Messkopf (62) nach Anspruch 1, wobei die erste Lichtquelle (74) außerhalb des Gehäuses (64) angeordnet ist.

3. Messkopf (62) nach einem der vorhergehenden Ansprüche, wobei das Spektrometer (70) als mikro-elektro-mechanisches System, MEMS, ausgeführt ist.

4. Messkopf (62) nach einem der vorhergehenden Ansprüche, wobei die optische Achse des Spektrometers (70) mit der Oberflächennormalen des Fensters (66) einen von null verschiedenen Winkel einschließt.

5. Messkopf (62) nach einem der vorhergehenden Ansprüche, mit wenigstens einem im Gehäuse (64) angeordneten, weiteren Spektrometer (70'), das gegenüber dem Spektrometer (70) winkelversetzt angeordnet ist.

6. Messkopf (62) nach Anspruch 5, wobei die beiden Spektrometer (70, 70') teilweise überlappende oder verschiedene spektrale Messbereiche aufweisen.

7. Messkopf (62) nach einem der vorhergehenden Ansprüche, wobei die Lichtquellen (74, 76) und der Filter (80) mit einer Steuerung (96) verbunden sind, die betreibbar ist, im normalen Messbetrieb die erste Lichtquelle (74) einzuschalten und die zweite Lichtquelle (76) auszuschalten und den Filter (80) undurchlässig zu schalten und zur Referenzierung des Spektrometers (70) die erste Lichtquelle (74) auszuschalten und die zweite Lichtquelle (76) einzuschalten und den Filter (80) durchlässig zu schalten.

8. Landwirtschaftliche Maschine mit einem Messkopf (62) nach einem der vorhergehenden Ansprüche.

## Claims

1. Spectroscopic measuring head (62) for forestry, agricultural and food applications, comprising:
a housing (64) having a window (66) and a spectrometer (70) which is arranged inside the housing (64) and which comprises a dispersive element (100) and a sensor (102),
a first light source (74) for exposing a sample (98) to light which, after it has been transmitted and/or reflected by the sample (98), passes through the window (66) into the spectrometer (70),
a standard (78) that can be exposed to light for referencing the spectrometer (70), wherein the standard (78) can be exposed to light by a second light source (76) arranged in the housing (64), a partly transmissive mirror (68) is arranged on the window (66) or between the window (66) and the spectrometer (70) and reflects light reflected by the standard (78) into the spectrometer (70), and a filter (80) having electrically controllable transmissivity is arranged between the second light source (76) and the spectrometer (70),
**characterized in that** the filter (80) is arranged between the mirror (68) and the standard (78).

2. Measuring head (62) according to Claim 1, wherein the first light source (74) is arranged outside of the housing (64) .

3. Measuring head (62) according to either of the preceding claims, wherein the spectrometer (70) is embodied as a microelectromechanical system, MEMS.

4. Measuring head (62) according to one of the preceding claims, wherein the optical axis of the spectrometer (70) forms a non-zero angle with the surface normal of the window (66).

5. Measuring head (62) according to one of the preceding claims, having at least one further spectrometer (70') which is arranged in the housing (64) and is arranged so as to be angularly offset with respect to the spectrometer (70).

6. Measuring head (62) according to Claim 5, wherein the two spectrometers (70, 70') have partially overlapping or different spectral measuring ranges.

7. Measuring head (62) according to one of the preceding claims, wherein the light sources (74, 76) and the filter (80) are connected to a controller (96) which can be operated, in normal measuring operation, to turn on the first light source (74) and to turn off the second light source (76) and to turn the filter (80) non-transmissive, and, for referencing the spectrometer (70), to turn off the first light source (74) and to turn on the second light source (76) and to turn the filter (80) transmissive.

8. Agricultural machine having a measuring head (62) according to one of the preceding claims.

## Revendications

1. Tête de mesure spectroscopique (62) destinée à des applications forestières, agricoles et agro-alimentaires, ladite tête de mesure comprenant :
un boîtier (64) pourvu d'une fenêtre (66) et d'un spectromètre (70) qui est disposé à l'intérieur du boîtier (64) et qui comprend un élément dispersif (100) et un capteur (102),
une première source de lumière (74) destinée à soumettre un échantillon (98) à la lumière qui pénètre dans le spectromètre (70) par la fenêtre (66) après avoir été transmise et/ou réfléchie par l'échantillon (98),
un étalon (78) qui peut être soumis à la lumière afin de référencer le spectromètre (70), l'étalon (78) pouvant être soumis à une lumière par le biais d'une deuxième source de lumière (76) disposée dans le boîtier (64), un miroir partiellement transparent (68) étant disposé sur la fenêtre (66) ou entre la fenêtre (66) et le spectromètre (70), lequel miroir réfléchit la lumière, réfléchie par l'étalon (78), jusque dans le spectromètre (70) et un filtre (80) à perméabilité commandable électriquement étant disposé entre la deuxième source de lumière (76) et le spectromètre (70),
**caractérisée en ce que** le filtre (80) est disposé entre le miroir (68) et l'étalon (78).

2. Tête de mesure (62) selon la revendication 1, la première source de lumière (74) étant disposée à l'extérieur du boîtier (64) .

3. Tête de mesure (62) selon l'une des revendications précédentes, le spectromètre (70) étant conçu comme un système micro-électromécanique, MEMS.

4. Tête de mesure (62) selon l'une des revendications précédentes, l'axe optique du spectromètre (70) formant un angle non nul avec la normale à la surface de la fenêtre (66) .

5. Tête de mesure (62) selon l'une des revendications précédentes, comprenant au moins un autre spectromètre (70') qui est disposé dans le boîtier (64) et qui est décalé angulairement par rapport au spectromètre (70).

6. Tête de mesure (62) selon la revendication 5, les deux spectromètres (70, 70') comportant des domaines de mesure spectraux différents ou partiellement superposés.

7. Tête de mesure (62) selon l'une des revendications précédentes, les sources de lumière (74, 76) et le filtre (80) étant reliés à une commande (96) dont le fonctionnement permet, en mode de mesure normal, d'activer la première source de lumière (74), et de désactiver la deuxième source de lumière (76) et de commuter le filtre (80) en mode opaque et de désactiver la première source de lumière (74) en vue de référencer le spectromètre (70) et d'activer la deuxième source de lumière (76) et de commuter le filtre (80) en mode transparent.

8. Machine agricole comprenant une tête de mesure (62) selon l'une des revendications précédentes.
